# EUROPÄISCHE PATENTSCHRIFT

(11) **EP 4 202 528 B1**
(45) Veröffentlichungstag und Bekanntmachung des Hinweises auf die Patenterteilung: **19.08.2026**
(21) Anmeldenummer: 21216992.4
(22) Anmeldetag: 22.12.2021
(51) Int. Cl.: G02B 26/02, G02B 26/08

(54) **MEMS DISPLAY**
MEMS DISPLAY
AFFICHAGE MEMS

(43) Veröffentlichungstag der Anmeldung: 28.06.2023
(73) Patentinhaber: Universität Kassel, 34125 Kassel (DE); Nanoscale Glasstec GmbH, 34132 Kassel (DE)
(72) Erfinder: HILLMER, Hartmut, 34128 Kassel (DE); XU, Guilin, 34132 Kassel (DE)
(74) Vertreter: Walther Bayer Faber Patentanwälte PartGmbB

(56) Entgegenhaltungen:
- KR-A- 20120 023 510
- US-A1- 2010 156 859
- US-B1- 6 639 572
- US-B1- 9 007 676

## Beschreibung

Die vorliegende Erfindung betrifft ein Display zur optischen Wiedergabe von veränderlichen Informationen.

### STAND DER TECHNIK

Displays sind Bestandteile von Anzeigegeräten für die optische Wiedergabe von veränderlichen Informationen, insbesondere für die Darstellung von Bildern, Videos oder Texten, wobei die darzustellenden Informationen üblicherweise elektronisch an das Display übertragen werden. Displays sind beispielsweise Bestandteile von Fernsehgeräten, Computermonitoren und digitalen Beschilderungen, sowie von mobilen Geräten wie Tablet-Computern und Smartphones.

Der Display-Markt, insbesondere für Unterhaltungselektronik, wird heutzutage von Displays in Form von Flüssigkristallanzeigen (liquid crystal display, LCD) und Leuchtdiodenanzeigen basierend auf Festkörperleuchtdioden (LED) oder organischen Leuchtdioden (OLED) dominiert.

Die optische Informationswiedergabe durch Displays beruht auf einer räumlich-zeitlichen Modulation einer durch einen Betrachter wahrgenommenen Lichtverteilung. Im Rahmen der vorliegenden Anmeldung ist unter dem Begriff "Display" ein Direktsicht-Display zu verstehen. Die wiedergegebene Information ist bei einem Direktsicht-Display durch direkte Ansicht des Displays wahrnehmbar, d.h., durch direkte Ansicht derjenigen Komponenten des Displays, welche die räumlich-zeitliche Modulation der durch den Betrachter wahrgenommenen Lichtverteilung erzeugen. Diese Definition erfolgt als Abgrenzung zu Projektionsdisplays, insbesondere basierend auf Chips mit Mikrospiegelaktuatoren (digital micromirror device, DMD) zur Projektion von Information als modulierte Lichtverteilung auf eine beabstandete Projektionsfläche, auf welcher die wiedergegebene Information dargestellt wird und welche zur Ansicht durch den Betrachter vorgesehen ist.

Die US 2010/0156859 A1 offenbart eine Informationsanzeigetafel zum Umschreiben und Anzeigen von Informationen, wie z.B. einem Bild, durch elektrisches Verbinden einer Anzeigeeinheit mit einer Speicherfunktion mit einem Treiberschaltungssubstrat, wobei Anbringungs-/Ablösungsmechanismus zur lösbaren Verbindung der Anzeigeeinheit mit dem Treiberschaltungssubstrat vorgesehen ist. Die Anzeige, lösbar ist und an dem Befestigungs-/Lösemechanismus zum Verbinden mit einer Treiberschaltung befestigt ist. Die Informationsanzeigetafel ist beispielsweise zur Verwendung als elektronisches Preisschild geeignet.

Die KR 2012 0023510 A offenbart eine optische Anzeigevorrichtung, basierend auf einer Anordnung von Mikroshuttern, die auf einem Substrat angeordnet und zwischen einer planaren und einer vertikalen Stellung schwenkbar sind, wobei die Schwenkbarkeit auf der thermischen Ausdehnung eines Bimetalls beruht. Die Mikroshutter bilden Bildpixel und weisen schwarze oder farbige Oberflächen auf, wobei das Substrat eine kontrastierende Oberfläche aufweist oder transparent ausgebildet ist. Beispielsweise kann eine Hinterleuchtung des Substrats vorgesehen sein.

Die US 6,639,572 B1 offenbart eine papierweiße Direktsichtanzeige mit geringem Stromverbrauch umfassend eine Anordnung von schwenkbaren Mikrospiegeln, die zwischen zwei Zuständen ausgelenkt werden, einem ersten Zustand, in dem der Mikrospiegel einen Teil des Hintergrunds abdeckt, und einem zweiten Zustand, in dem der Mikrospiegel den Hintergrund freilegt. In einer besonderen Konfiguration ist ein Stabilitätsmechanismus in die Anzeige integriert, so dass die Mikrospiegel zwischen stabilen Zuständen wechseln und in diesen stabilen Zuständen verbleiben, bis eine Betätigungskraft auf die Mikrospiegel ausgeübt wird, die ausreicht, um eine Betätigungsschwelle zu überwinden. Die Bistabilität ermöglicht es, dass die Anzeige zwischen den Aktualisierungen stromlos geschaltet werden kann, muss aber zwischen beiden Zuständen aktiv angesteuert werden. Die Ansteuerungselektronik ähnelt derjenigen, die in Multiplex-LCDs verwendet wird.

Die US 9,007,676 B1 offenbart eine elektrostatische Anzeige basierend auf MEMS-Technologie mit einer Anordnung drehbarer Mikrocantilever. Der Übergang von weißer zu schwarzer Pixelfarbe erfolgt, wenn zwei Mikrocantilever, die den Pixelbereich abdecken, elektrostatisch aus ihrer Position parallel zur Substratebene in eine Position senkrecht zur Substratebene gedreht werden. Vier Elektroden-Pixel-Steuerkreise werden verwendet, um eine Zeilen- und Spaltenmatrix zu bilden. Diese Matrix nutzt einen Bi-Stabilitätseffekt, der sich aus der Differenz der Spannungen ergibt, die erforderlich sind, um die Mikrocantilever in eine aufrechte Position zu bringen und zu halten.

Weiterhin sind sogenannte Flip-Disc (oder Flip-Dot) Displays bekannt, welche für Anzeigetafeln mit großen Zeichen eingesetzt werden, beispielsweise in Bahnhöfen und Flughäfen zur Anzeige von Fahr- bzw. Flugplänen. Flip-Disc Displays basieren auf einer matrixförmigen Anordnung von elektromagnetisch-mechanischen Bauteilen, welche je nach Ansteuerung über eine Drehvorrichtung jeweils eine von zwei unterschiedlich gefärbten Seiten eines Plättchens zeigen. Jedes Plättchen ist an einer Achse aufgenommen, wobei das Plättchen oder die Achse einen kleinen Permanentmagneten aufweisen, und einer steuerbaren Magnetspule zugeordnet. Durch Ansteuerung der Magnetspule mit einer entsprechenden elektrischen Polarität richtet sich der Permanentmagnet in dem resultierenden Magnetfeld unter Drehung des Plättchens aus.

### OFFENBARUNG DER ERFINDUNG

Es ist die Aufgabe der vorliegenden Erfindung eine alternative Ausführungsform eines Displays zur optischen Wiedergabe von veränderlichen Informationen vorzuschlagen, welches insbesondere durch einen geringen Energiebedarf und eine hohe Blickwinkelunabhängigkeit ausgezeichnet ist.

Diese Aufgabe wird von einem Display gemäß Anspruch 1 gelöst. Vorteilhafte Weiterbildungen der Erfindung sind in den abhängigen Ansprüchen angegeben.

Die Erfindung schließt die technische Lehre ein, dass das Display eine regelmäßige Anordnung von Mikroblattelementen mit aktuierbaren Blattabschnitten aufweist, welche zwischen einer geschlossenen und wenigstens einer geöffneten Stellung schwenkbar ausgebildet sind, derart, dass die Informationswiedergabe auf einer räumlich-zeitlichen Modulation der optischen Reflektivität des Displays mittels Aktuierung der Blattabschnitte basiert, wobei die Vorderseite und die Hinterseite der Blattabschnitte eine Spiegelwirkung für sichtbares Licht aufweisen, wobei das Display eine lichtundurchlässige rückseitige Grundplatte umfasst, wobei die rückseitige Grundplatte einen schwarzen Farbeindruck erzeugt, insbesondere indem die rückseitige Grundplatte eine schwarze Farbbeschichtung, ein schwarzes Substrat und/oder eine lichtabsorbierende Grenzflächenstruktur aufweist, und wobei die rückseitige Grundplatte eine Antireflexbeschichtung aufweist, insbesondere basierend auf einem Schichtstapel aus Al₂O₃-, Si₃N₄- und SiO₂-Dünnschichten oder einem Schichtstapel aus Al₂O₃-, Si₃N₄- und MgF₂-Dünnschichten. Erfindungsgemäß ist zudem vorgesehen, dass die Schwenkrichtungen aller Blattabschnitte beim Schwenken um ihre Schwenkachse zwischen der geschlossenen und der wenigstens einen geöffneten Stellung gleich sind. Die Erfindung geht von dem Gedanken aus, mikro-elektro-mechanische Systeme (MEMS) in Form von Mikroblattelementen zur Lichtmodulation einzusetzen, derart, dass die Logikwerte der auf dem erfindungsgemäßen Display wiederzugebenden Information in der Stellung der aktuierbaren Blattabschnitte der Mikroblattelemente codiert sind, wobei jedem Bildpunkt (Pixel) des Displays wenigstens ein Mikroblattelement zugeordnet ist. Beispielsweise kann der Wert "logisch-1" durch die geschlossene Stellung und der Wert "logisch-0" durch die (maximal) geöffnete Stellung eines Blattabschnitts repräsentiert werden. Die Stellung der Blattabschnitte bestimmt jeweils die lokale Reflektivität des Displays. Die lichttechnische

Wirkung der Oberflächen der Blattabschnitte und einer dahinterliegenden, rückseitigen Grundplatte des Displays, welche durch die Blattabschnitte je nach Stellung verdeckt oder freigelegt wird, ist dabei derart unterschiedlich beschaffen, dass für einen Betrachter bei direkter Ansicht des Displays ein kontrastreicher optischer Eindruck entsteht, welcher zur Informationswiedergabe geeignet ist. Neben einer rein binären Informationswiedergabe mit genau zwei verschiedenen Stellungen der Blattabschnitte, d.h., einer geschlossenen und einer (vollständig) geöffneten Stellung, können mittels jedem einzelnen Mikroblattelement prinzipiell auch Grauwerte dargestellt werden, indem der Blattabschnitt eine Zwischenstellung einnimmt, in welcher die dahinterliegende Grundplatte nur teilweise verdeckt ist.

Erfindungsgemäß sind die Mikroblattelemente in regelmäßiger Matrixform in parallelen Zeilen und parallelen Spalten angeordnet, wobei vorzugsweise die Gesamtheit der Mikroblattelemente den zur Informationswiedergabe ausgebildeten Abschnitt des Displays definiert. Jedem Bildpunkt (Pixel) sind dabei ein oder mehrere Mikroblattelemente zugeordnet.

Die zur Aktuierung von MEMS notwendige Leistung ist typischerweise überaus gering. Wie nachstehend detailliert dargestellt, basiert eine bevorzugte Ausführungsform des erfindungsgemäßen Displays auf Mikroblattelementen mit elektrostatisch aktuierbaren Blattabschnitten und es konnten im Labormaßstab matrixförmige Arrays derartiger Mikroblattelemente (Maße von 400 x 150 µm² je Mikroblattelement) hergestellt werden, welche zur dauerhaften Aktuierung lediglich eine elektrische Leistung von 0,2 - 2 mW/m² verbrauchen. Die zur Lichtmodulation, d.h., zur räumlich-zeitlichen Modulation der Reflektivität des erfindungsgemäßen Displays benötigte Leistung ist somit selbst bei sehr großer aktiver Displayfläche gering im Vergleich zur Leistungsaufnahme bei der Dünnschichttransistor-Ansteuerung (TFT) von LCD oder OLED-Displays aus dem Stand der Technik. Weiterhin können die Mikroblattelemente mit elektrostatisch aktuierbaren Blattabschnitten bei Schaltfrequenzen im Bereich von bis zu 1 MHz betrieben werden. Aufgrund der geringen Trägheitskräfte bei der Bewegung von MEMS ist der dabei auftretende Verschleiß minimal, sodass eine langlebige Funktionalität der Strukturen gewährleistet ist.

Im Unterschied zu Flip-Disc Displays aus dem Stand der Technik stellt das erfindungsgemäße Display mit elektrostatisch aktuierbaren Mikroblattelementen eine miniaturisierte Lösung dar, welche wesentlich höhere Auflösung und Schaltfrequenzen sowie einen signifikant geringeren Energieverbrauch aufweist.

Zur Herstellung der Mikroblattelemente können gängige Dünnschichtverfahren angewandt werden, insbesondere unter Einsatz von Depositionsprozessen, Lithographie- und Ätzschritten sowie von Opferschichttechniken. Detaillierte Angaben zur Fertigung und Funktion einer regelmäßigen Anordnung von Mikroblattelementen mit Spiegelwirkung finden sich beispielsweise in Hillmer et al., Jpn. J. Appl. Phys. 57, 08PA07 (2018).

Erfindungsgemäß weisen die Vorderseite und die Hinterseite der Blattabschnitte eine Spiegelwirkung für sichtbares Licht auf, wobei das Display eine lichtundurchlässige rückseitige Grundplatte umfasst. Erfindungsgemäß erzeugt die rückseitige Grundplatte einen schwarzen Farbeindruck, beispielsweise indem die rückseitige Grundplatte eine schwarze Farbbeschichtung, ein schwarzes Substrat und/oder eine lichtabsorbierende Grenzflächenstruktur aufweist. In dieser Ausführungsform ist das Display als ein reflektives Display ausgebildet, welches eine frontseitige Beleuchtung benötigt, d.h., eine Beleuchtung aus demjenigen Halbraum, in welchen die zur Informationswiedergabe ausgebildete Frontseite des Displays gerichtet ist. Dabei kann insbesondere vorgesehen sein, Tages- bzw. Umgebungslicht zur Beleuchtung des Displays zu verwenden, d.h., dem Display keine dedizierte Beleuchtungseinrichtung zuzuordnen. Die Informationswiedergabe beruht auf dem optischen Kontrast zwischen der spiegelnden Vorderseite der Blattabschnitte und dem absorbierenden, bevorzugt schwarzen Farbeindruck der dahinter angeordneten, rückseitigen Grundplatte. Der Kontrast ist dabei wesentlich höher als bei reflektiv betriebenen LCD aus dem Stand der Technik, da Letztere signifikante Absorptionsverluste aufgrund der vom Licht zu durchlaufenden Polarisatoren aufweisen. Dank des hohen Kontrastes ist das erfindungsgemäße Display besonders geeignet für die Anwendung als reflektives Display basierend auf reiner Umgebungslichtbeleuchtung, d.h., ohne separate Beleuchtungseinrichtung.

Insbesondere weist das erfindungsgemäße Display eine frontseitige Grundplatte und eine rückseitige Grundplatte auf, wobei die frontseitige Grundplatte lichtdurchlässig ausgebildet ist, und wobei die Mikroblattelemente in einem Zwischenraum zwischen den Grundplatten aufgenommen sind, wobei jedes Mikroblattelement einen Blattabschnitt aufweist und mittels eines randseitigen Befestigungsabschnitts scharnierartig auf einer der Grundplatten angeordnet ist, derart, dass jeder Blattabschnitt ausgehend von einer geschlossenen, parallel zu den Grundplatten orientierten Stellung in wenigstens eine geöffnete, insbesondere rechtwinklig zu den Grundplatten orientierte Stellung schwenkbar ist. Als Vorderseite der Blattabschnitte wird in allen Ausführungsformen diejenige Seite bezeichnet, welche bei geschlossener Stellung der Blattabschnitte in Richtung auf die frontseitige Grundplatte orientiert ist, d.h., welche einem Betrachter des Displays zugewandt ist.

Die Grundplatten umfassen dabei üblicherweise zumindest ein Substrat, insbesondere aus Glas, sowie optional auf dem Substrat abgeschiedene Schichten, insbesondere mit dedizierten lichttechnischen Funktionen, beispielsweise eine schwarze Farbbeschichtung. Die vorgenannte lichtabsorbierende Grenzflächenstruktur kann beispielsweise in Form eines Pyramiden-Arrays in die Rückseite des Substrats der rückseitigen Grundplatte eingebracht und mit einer schwarzen Farbbeschichtung überdeckt sein.

Die Mikroblattelemente sind innenseitig auf einer der beiden Grundplatten angeordnet und werden von diesen schützend eingeschlossen. Die Grundplatten sind insbesondere plattenförmig, d.h., als dünne Quader ausgebildet, können aber alternativ als gekrümmte Körper ausgebildet sein, sodass die zur Informationswiedergabe vorgesehene Frontseite des Displays beispielsweise konkav oder konvex gekrümmt ist.

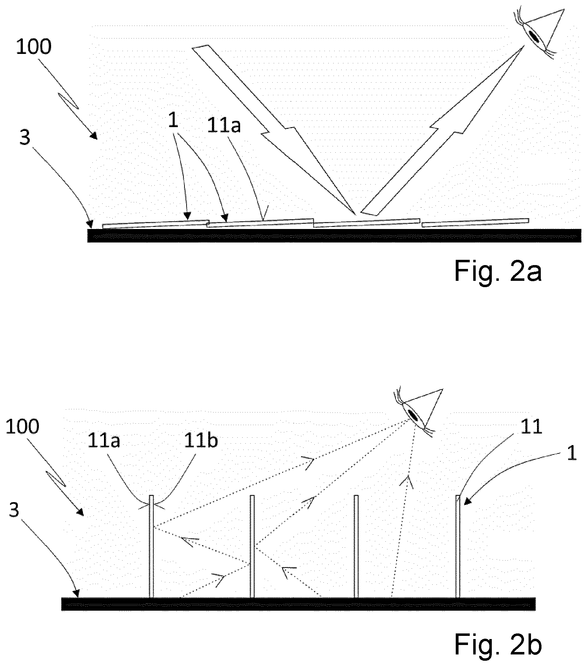

Bei dem erfindungsgemäßen reflektiven Display weist die lichtundurchlässige, geschwärzte, rückseitige Grundplatte eine Antireflexbeschichtung auf, insbesondere basierend auf einem Schichtstapel aus Al₂O₃-, Si₃N₄- und SiO₂-Dünnschichten oder einem Schichtstapel aus Al₂O₃-, Si₃N₄- und MgF₂-Dünnschichten. Die Antireflexbeschichtung sorgt für einen höheren Kontrast, da dadurch das Schwarz noch dunkler erscheint. Dieser Effekt ist auch unter sehr flachen Blickwinkeln gegeben, und in Kombination mit verspiegelten Blattelementen (siehe Figur 2b) ist somit ein hoher Bildkontrast weitgehend unabhängig vom Blickwinkel des Betrachters auf das Display gewährleistet.

Weiterhin kann das erfindungsgemäße Display zur Informationswiedergabe in Farbdarstellung eingerichtet sein, indem es einen Farbfilter, insbesondere in Form eines Bayer-Filters, aufweist, vorzugsweise derart, dass jedem Farbpunkt des Farbfilters wenigstens ein Mikroblattelement zugeordnet ist. Ein Bayer-Filter ist ein schachbrettförmiger RGB-Farbfilter, welcher üblicherweise 50% grüne pixelförmige Farbpunkte und je 25% rote und blaue pixelförmige Farbpunkte aufweist. Jeder Bildpunkt des Displays wird beispielsweise aus zwei grünen und je einem roten und blauen Farbpunkt gebildet. Jedem Farbpunkt des Farbfilters kann insbesondere genau ein Mikroblattelement zugeordnet sein, d.h., dass durch Aktuierung jedes Blattelements ein individueller Farbpunkt schaltbar ist. Alternativ kann jedem Farbpunkt des Farbfilters eine Gruppe von Mikroblattelementen zugeordnet sein, beispielsweise als eine redundante Absicherung. Zudem kann es Display Anwendungen geben, bei denen in der geschlossenen Stellung der Blattabschnitte ein besonders niedriger Transmissionsgrad gefordert ist, wobei sich der minimale Transmissionsgrad mit zunehmender Größe der Mikroblattelemente verringert. Die minimale Transmission wird durch die Bereiche des Displays bestimmt, an welchen benachbarte Mikroblattelemente aneinandergrenzen. Sofern Einbußen bei der Qualität der Farbwiedergabe tolerierbar sind, kann in solchen Fällen die Größe der Mikroblattelemente die Größe der Farbpunkte des Farbdisplays übersteigen, d.h., dass jedem Mikroblattelement mehr als ein Farbpunkt zugeordnet sein kann. Die lichtdurchlässige frontseitige Grundplatte umfasst den Farbfilter.

Nachfolgend werden Details betreffend den Aufbau und die Aktuierbarkeit der Mikroblattelemente beschrieben.

In einer bevorzugten Ausführungsform weisen die Mikroblattelemente jeweils einen Schichtaufbau auf, welcher wenigstens eine druckverspannte Schicht und eine zugverspannte Schicht umfasst, wobei der Blattabschnitt jedes Mikroblattelements zudem eine zweckmäßig verspannte Kompensationsschicht aufweist, derart, dass jedes Mikroblattelement in die folgenden Abschnitte unterteilt ist:
- den Blattabschnitt, welcher global spannungsfrei ausgebildet ist und zwei im Wesentlichen planparallele Oberflächen aufweist,
- den randseitigen Befestigungsabschnitt, welcher starr auf einer der Grundplatten angeordnet ist, und
- einen dazwischenliegenden Scharnierabschnitt, welcher eine eigenspannungsinduzierte Krümmung aufweist, wodurch eine geöffnete Stellung des Mikroblattelements gebildet ist.

Dabei befinden sich die Mikroblattelemente bei Abwesenheit einer externen Aktuierung in einer maximal geöffneten Stellung, welche aufgrund der vorliegenden Eigenspannungen durch eine Krümmung des Scharnierabschnitts zwischen dem auf der Grundplatte insbesondere stoffschlüssig fixierten Befestigungsabschnitt und dem spannungskompensierten Blattabschnitt zustande kommt. Beispielsweise weist der Scharnierabschnitt einen Krümmungsradius auf, welcher ein Hundertstel bis ein Drittel der Länge der längsten Seite der Kontur des jeweiligen Blattabschnitts beträgt.

Die Krümmung des Scharnierabschnitts kann auch mittels einer einzigen Schicht realisiert werden, in welcher vertikal zur Oberfläche bzw. Grenzfläche ein Spannungsgradient herrscht, derart, dass an den entgegengesetzten Seiten der einzigen Schicht jeweils Druck- oder Zugspannungen vorliegen.

Weiterhin ist das Schwenken der Blattabschnitte zwischen der geschlossenen Stellung und der wenigstens einen geöffneten Stellung vorzugsweise mittels eines elektrostatischen Wirkprinzips aktuierbar, wozu die zugehörige Grundplatte eine elektrisch leitfähige Elektrodenschicht und wenigstens eine elektrisch isolierende Isolationsschicht umfasst, wobei der Befestigungsabschnitt jedes Mikroblattelements auf der Isolationsschicht angeordnet ist, und die Blattabschnitte jeweils eine Elektrode aufweisen oder bilden, derart, dass durch Anlegen von elektrischen

Spannungssignalen zwischen den Elektroden und der Elektrodenschicht einzelne Mikroblattelemente und/oder Gruppen von Mikroblattelementen aktuierbar sind.

Vorzugsweise sind die Blattabschnitte in der maximal geöffneten Stellung um ca. 90° gegenüber der geschlossenen Stellung geschwenkt, d.h., im Wesentlichen orthogonal zu den Grundplatten ausgerichtet. **In** einer solchen Senkrechtstellung ist bei senkrechtem Lichteinfall auf die Grundplatten eine maximale Lichttransmission durch das jeweilige Mikroblattelement gegeben, und diese Stellung wird eingenommen, wenn die Mikroblattelemente keiner elektrostatischen Kraft durch eine angelegte elektrische Spannung unterliegen, so dass die Scharnierabschnitte rein nach Maßgabe ihrer mechanischen Eigenspannungen aufgerollt sind.

Zwischen der maximal geöffneten Stellung und der geschlossenen Stellung der Blattabschnitte können beispielsweise weitere Zwischenstellungen eingenommen werden, welche bzgl. des Transmissionsgrads entsprechende Grauwerte repräsentieren. Ausgehend von der maximal geöffneten Stellung der Blattabschnitte kann durch Anlegen einer kontinuierlich steigenden elektrischen Spannung zwischen Grundplatte und Elektroden ein stufenloses Schließen der Mikroblattelemente erfolgen bis zu einer Grenzspannung, ab welcher die Mikroblattelemente vollständig schließen. Diese Vielfalt von dediziert einstellbaren Öffnungswinkeln der Blattabschnitte gegenüber den Grundplatten ist zur gezielten Darstellung von Grauwerten bei der Informationswiedergabe nutzbar.

Das erfindungsgemäße Display weist insbesondere ein Adressierungsnetzwerk aus schmalen, planaren Leitungen auf einer der Grundplatten auf, welche elektrische Verbindungen zwischen den Elektrodenschichten von individuellen Mikroblattelementen oder von Gruppen von Mikroblattelementen und einer randseitigen Schnittstelle zur computergesteuerten Adressierung und Aktuierung der Mikroblattelemente bilden. Eine solche Ansteuerung ist insbesondere für die Ausführungsform als transmissives Display vorgesehen, wohingegen das reflektive Display aufgrund der lichtundurchlässigen rückseitigen Grundplatte alternativ eine aktive oder direkte Adressierung erlaubt, bei welcher die Ansteuerelektronik unmittelbar unter den Mikroblattelementen angeordnet ist.

Die Blattabschnitte weisen beispielsweise eine rechteckige Kontur auf, insbesondere eine quadratische Kontur, wobei die Kanten der Blattabschnitte eine Länge im Bereich von 10 Mikrometer bis 1 Millimeter, vorzugsweise 100 Mikrometer bis 200 Mikrometer, aufweisen. Die Maße der Blattabschnitte können zweckmäßig an die konkrete Anforderung des betreffenden Displays angepasst sein, insbesondere im Hinblick auf die gewünschte Bildauflösung.

Das erfindungsgemäße Display ist insbesondere zur Verwendung für ein elektronisches Preisschild vorgesehen. Elektronische Preisschilder werden beispielsweise in Supermärkten und Warenhäusern zur Auszeichnung angebotener Ware verwendet und dienen etwa der Angabe eines Preises, einer Artikelbezeichnung, eines zugehörigen Strichcodes und von Zusatzinformationen, etc. Da die Warenauslagen typischerweise hell ausgeleuchtet sind und das erfindungsgemäße Display einen hohen optischen Kontrast erzeugt, kann vorteilhafterweise ein reflektives Display ohne zusätzliche Beleuchtungseinrichtung verwendet werden, sodass außer zur Aktuierung der Blattabschnitte der Mikroblattelemente kein zusätzlicher Energiebedarf entsteht.

Weiterhin kann das erfindungsgemäße Display beispielsweise für diverse Anwendungen im Außenbereich verwendet werden, insbesondere unter Ausnutzung von Sonnenlicht als ausreichende Beleuchtung.

Die Erfindung betrifft zudem ein Anzeigegerät wenigstens umfassend ein Display zur optischen Wiedergabe von veränderlichen Informationen gemäß einer der vorgenannten Ausführungsformen und eine Beleuchtungseinrichtung zur homogenen Ausleuchtung des Displays. Die Beleuchtungseinrichtung ist zur vorderseitigen Ausleuchtung des Displays eingerichtet und angeordnet.

Für den Fachmann ist es offenkundig, dass eine elektronische Steuereinheit, insbesondere mit einem Microcontroller, zur Steuerung des Displays und der Beleuchtungseinrichtung vorzusehen ist. Eine zweckmäßige Steuereinheit ist selbstverständlich ebenfalls vorzusehen, sofern das Display nicht in ein Anzeigegerät mit separater Beleuchtungseinrichtung integriert ist, sondern ausschließlich zum Betrieb unter Beleuchtung durch Tages- bzw. Umgebungslicht vorgesehen ist.

### BEVORZUGTE AUSFÜHRUNGSBEISPIELE DER ERFINDUNG

Weitere, die Erfindung verbessernde Maßnahmen werden nachstehend gemeinsam mit der Beschreibung von bevorzugten Ausführungsbeispielen der Erfindung anhand der Figuren näher dargestellt. Es zeigen:
- Fig. 1: eine schematische, perspektivische Ansicht eines erfindungsgemäßen Displays,
- Fig. 2a, b: schematische Querschnittsteilansichten eines Displays gemäß Fig. 1,
- Fig. 3: eine schematische Querschnittsteilansicht eines ersten Ausführungsbeispiels des erfindungsgemäßen Displays,
- Fig. 4: schematische Querschnittsteilansicht zur Darstellung der elektrostatischen Aktuierung,
- Fig. 5: schematische Querschnittsteilansicht zur Darstellung der Eigenspannungen eines Mikroblattelements, und
- Fig. 6: berechnete Reflektivität von Grundplatten mit Antireflexbeschichtung.

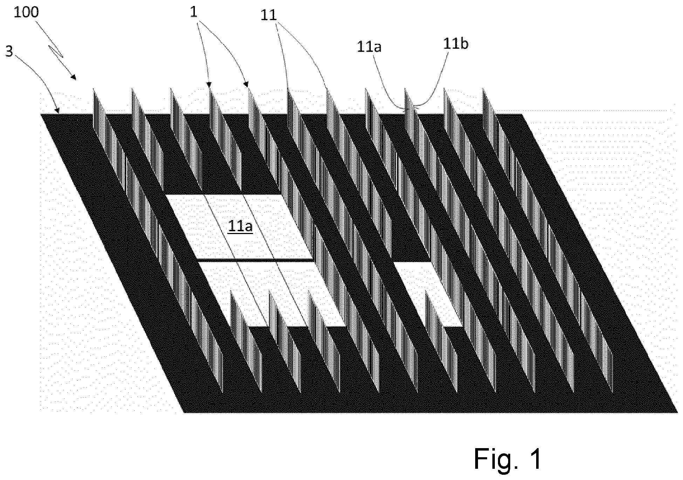

Figur 1 zeigt eine schematische, perspektivische Ansicht eines erfindungsgemäßen Displays 100 zur optischen Wiedergabe von veränderlichen Informationen. Das Display 100 weist eine regelmäßige Anordnung von Mikroblattelementen 1 mit aktuierbaren Blattabschnitten 11 in Anordnung auf der rückseitigen Grundplatte 3 auf. Die Mikroblattelemente 1 sind matrixförmig in Zeilen und Spalten angeordnet und die schwenkbaren Blattabschnitte 11 weisen jeweils rechteckförmige Konturen auf. Jedem durch das Display 100 darstellbarem Bildpunkt entspricht ein Mikroblattelement 1 oder eine Gruppe von Mikroblattelementen 1. In dem zur Informationswiedergabe vorgesehenen Abschnitt des Displays 100 bildet die Gesamtheit der Mikroblattelemente 1 im geschlossenen Zustand der Blattabschnitte 11 eine im Wesentlichen vollständige Flächenüberdeckung der rückseitigen Grundplatte 3.

Vorliegend sind sieben der Blattabschnitte 11 in geschlossener Stellung dargestellt, d.h., in einer Stellung parallel zur rückseitigen Grundplatte 3, sodass die Vorderseiten 11a dieser Blattabschnitte 11 in Richtung auf einen Betrachter des Displays 100 orientiert sind. Die übrigen Blattabschnitte 11 sind in einer geöffneten Stellung dargestellt, in welcher sie senkrecht zur rückseitigen Grundplatte 3 orientiert sind und somit den Blick auf diese freigeben. Die Vorderseite 11a und die Hinterseite 11b jedes Blattabschnitts 11 weisen eine Spiegelwirkung für sichtbares Licht auf, und die rückseitige Grundplatte 3 ist lichtundurchlässig und erzeugt einen schwarzen Farbeindruck.

Das vorliegende Display 100 ist somit als ein reflektives Display ausgebildet und die Informationswiedergabe basiert auf einer räumlich-zeitlichen Modulation der optischen Reflektivität, indem mittels Aktuierung der Blattabschnitte 11 der optische Eindruck der zugehörigen Bildpunkte zwischen hell reflektierend (geschlossene Stellung) und matt schwarz (vollständig geöffnete Stellung) veränderbar ist. Bei ausreichender Beleuchtung, beispielsweise durch Tageslicht, bietet das erfindungsgemäße Display 100 einen überaus scharfen Kontrast zwischen geöffneten und geschlossenen Blattabschnitten 11.

Die Figuren 2a und 2b zeigen schematische Querschnittsteilansichten eines Displays 100 gemäß Figur 1.

In Figur 2a sind die Blattabschnitte 11 der Mikroblattelemente 1 in nahezu geschlossener Stellung dargestellt, d.h., nahezu parallel zur rückseitigen Grundplatte 3 orientiert. Aufgrund der Spiegelwirkung der Vorderseiten 11a wird auf die Mikroblattelemente 1 frontseitig einfallendes Licht reflektiert (offene Pfeile) und erzeugt bei einem Betrachter die Wahrnehmung als helle Bildpunkte.

In Figur 2b liegen die Blattabschnitte 11 in geöffneter Stellung vor, sodass für den Betrachter die geschwärzte rückseitige Grundplatte 3 sichtbar ist. Aufgrund der Spiegelwirkung der Vorderseiten 11a und Hinterseiten 11b der Blattabschnitte 11 wird der schwarze Farbeindruck (gestrichelte Pfeile) der freigelegten Bildpunkte der rückseitigen Grundplatte 3 auch unter flachen Blickwinkeln auf das Display 100 erzeugt. Der vorteilhaft hohe Kontrast zur Informationswiedergabe des erfindungsgemäßen Displays 100 liegt somit in einem weiten Blickwinkelbereich vor. Dies insbesondere in Kombination mit einer Antireflexbeschichtung der rückseitigen Grundplatte 3, welche auch bei flachen Blickwinkeln parallel zu den Schwenkachsen der Blattabschnitte 11 einen satt schwarzen optischen Eindruck erzeugt.

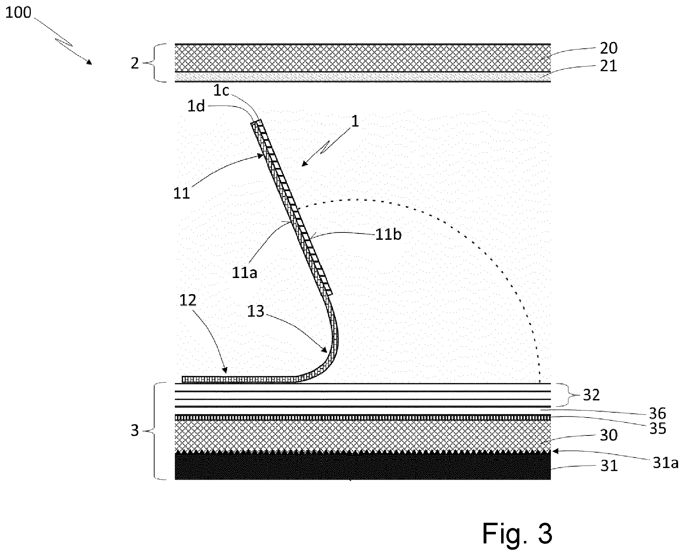

Die Figur 3 zeigt eine schematische Querschnittsteilansicht eines Ausführungsbeispiels des erfindungsgemäßen Displays 100. Die Darstellung umfasst Abschnitte der lichtdurchlässigen frontseitigen Grundplatte 2, der rückseitigen Grundplatte 3 und ein in dem Zwischenraum aufgenommenes Mikroblattelement 1. Die Darstellung stellt einen Ausschnitt aus einer regelmäßigen Anordnung einer Vielzahl von Mikroblattelementen dar.

Das Mikroblattelement 1 weist den Blattabschnitt 11 auf und ist mittels des randseitigen Befestigungsabschnitts 12 scharnierartig auf der rückseitigen Grundplatte 3 angeordnet, wobei der Blattabschnitt 11 jeweils in einer geöffneten Stellung vorliegt. Der Schwenkbereich des Blattabschnitts 11 ist durch den strichlierten Bogen skizziert und beträgt beispielhaft ca. 120° ausgehend von der geschlossenen Stellung, in welcher der Blattabschnitt 11 planparallel an der rückseitigen Grundplatte 3 anliegt. Alternativ kann der Schwenkbereich beispielsweise auf ca. 90° beschränkt sein. Die Schwenkbewegung erfolgt um eine Schwenkachse, welche hier senkrecht auf der Figurenebene steht.

Die Grundplatten 2, 3 umfassen jeweils ein lichtdurchlässiges Substrat 20, 30, insbesondere aus Glas. Beispielsweise können die Substrate 20, 30 alternativ aus einem flexiblen Werkstoff, etwa einem Polymer, gefertigt sein und gebogene Gestalten aufweisen, sodass das Display 100 beispielsweise eine konkave oder konvexe Krümmung aufweist. Die rückseitige Grundplatte 3 umfasst weiterhin die elektrisch leitfähige Elektrodenschicht 35 und wenigstens eine elektrisch isolierende Isolationsschicht 36, wobei der Befestigungsabschnitt 12 des Mikroblattelements 1 auf der Isolationsschicht 36 angeordnet ist, und der Blattabschnitt 11 eine Elektrode bildet, derart, dass durch Anlegen von elektrischen Spannungssignalen zwischen dem Mikroblattelement 1 und der Elektrodenschicht 35 das Mikroblattelemente 1, d.h., der Blattabschnitt 11 aktuierbar ist. Die Elektrodenschicht ist 35 dabei aus einem lichtdurchlässigen Werkstoff gebildet, beispielsweise aus Fluor-dotiertem Zinnoxid (FTO) oder Indiumzinnoxid (ITO). Weiterhin kann die Elektrodenschicht 35 aus einer zweckmäßigen Anordnung von Silber-Nanodrähten gebildet sein, welche eine höhere optische Transparenz und eine höhere elektrische Leitfähigkeit als eine FTO Schicht aufweist.

Alternativ zu dem Ausführungsbeispiel der Figur 3 können die Mikroblattelemente 1 auf der frontseitigen Grundplatte 2 angeordnet sein, welche dann mit den vorgenannten Schichten zur elektrostatischen Aktuierung vorzuhalten ist.

Die Figur 3 zeigt ein reflektives Display 100, bei welchem die rückseitige Grundplatte 3 lichtundurchlässig ist aufgrund der schwarzen Farbbeschichtung 31. Die Informationswiedergabe basiert auf einer räumlich-zeitlichen Modulation der optischen Reflektivität des Displays 100 mittels Aktuierung der Blattabschnitte 11.

In Figur 3 weisen die Vorderseite 11a und die Hinterseite 11b des Blattabschnitts 11 eine Spiegelwirkung für sichtbares Licht auf, sodass ein hoher Kontrast zum schwarzen Farbeindruck der rückseitigen Grundplatte 3 erzielt werden kann. Die Rückseite des Substrats 30 der rückseitigen Grundplatte 3 weist die lichtabsorbierende Grenzflächenstruktur 31a in Form eines Pyramidenmusters auf, wobei die schwarze Farbbeschichtung 31 die Grenzflächenstruktur 31a ausfüllt und überdeckt. Die Grenzflächenstruktur 31a hat die Wirkung einer Lichtfalle und sorgt für einen homogen schwarzen Farbeindruck auch unter flachen Blickwinkeln auf das Display 100. Das Ausführungsbeispiel der Figur 3 entspricht beispielhaft dem in den Figuren 1, 2a und 2b dargestellten Displaytyp.

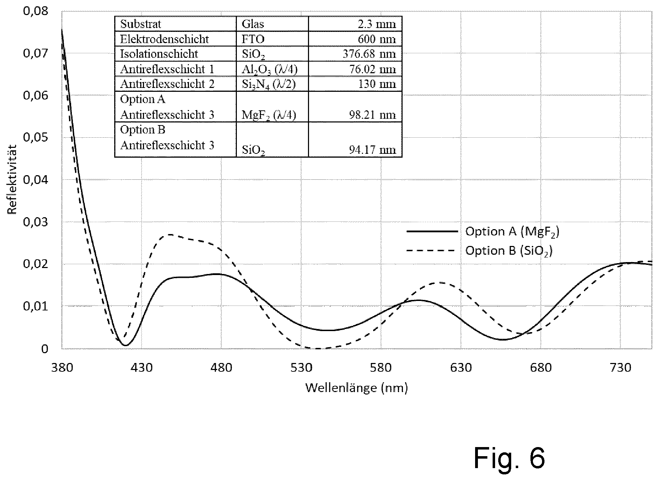

Weiterhin umfasst die rückseitige Grundplatte 3 die Antireflexbeschichtung 32, welche auf der Isolationsschicht 36 abgeschieden ist und selbst ebenfalls elektrisch isolierend ist. Die Antireflexbeschichtung 32 basiert hier beispielhaft auf einem Schichtstapel aus drei Dünnschichten. Für eine rückseitige Grundplatte 3 basierend auf einem Glassubstrat 30, einer transparenten FTO-Elektrodenschicht 35, einer SiO₂-Isolationsschicht 36 und einer Antireflexbeschichtung 32 basierend auf Al₂O₃-, Si₃N₄- und SiO₂-Dünnschichten oder Al₂O₃-, Si₃N₄- und MgF₂-Dünnschichten beträgt die optische Reflektivität im sichtbaren Lichtspektrum beispielsweise weniger als 2% (siehe Figur 6).

Die frontseitige Grundplatte 2 umfasst den Farbfilter 21. Bei geschlossenem Mikroblattelement 1 wird das von der Vorderseite 11a des Blattabschnitts 11 reflektierte Licht bei der Transmission durch den Farbfilter 21 entsprechend gefiltert, d.h. insbesondere als grünes, rotes oder blaues Licht aus der frontseitigen Grundplatte 2 ausgestrahlt.

Das Mikroblattelement 1 weist die Gradientenschicht 1d auf, welche die Krümmung des Mikroblattelements 1 verursacht, indem ein ausgeprägter Gradient der mechanischen Eigenspannungen innerhalb der Gradientenschicht 1d vorliegt, d.h., dass sich die Verspannung in Richtung senkrecht zur Oberfläche der Gradientenschicht 1d ändert und so ein Verspannungsgradient entsteht. Im Bereich der Unterseite, welche im Befestigungsabschnitt 12 die Grenzfläche zur rückseitigen Grundplatte 3 bildet, liegt die Gradientenschicht 1d in einem druckverspannten Zustand vor, wohingegen die gegenüberliegende Oberseite zugverspannt ist. Die Krümmung des Mikroblattelements 1 im Scharnierabschnitt 13 erfolgt nach Maßgabe dieser Spannungsverhältnisse. Eine abschnittsweise Kompensation der Krümmung erfolgt durch die zugverspannte Kompensationsschicht 1c unter Bildung des planaren Blattabschnitts 11.

Die Displays 100 aller Ausführungsbeispiele weisen vorzugsweise hier nicht dargestellte Adressierungsnetzwerke aus elektrischen Leitungen auf, welche elektrische Verbindungen zwischen individuellen Mikroblattelementen 1 oder Gruppen von Mikroblattelementen 1 und einer Schnittstelle zur computergesteuerten Adressierung und Aktuierung der Mikroblattelemente 1 mittels Spannungssignalen bilden. Die elektrischen Leitungen sind beispielsweise als metallische Dünnschichten auf der rückseitigen Grundplatte 3 aufgebracht oder in diese integriert, insbesondere kann die Elektrodenschicht 35 mikrostrukturiert, d.h., in voneinander unabhängig elektrisch beschaltbare Abschnitte unterteilt sein.

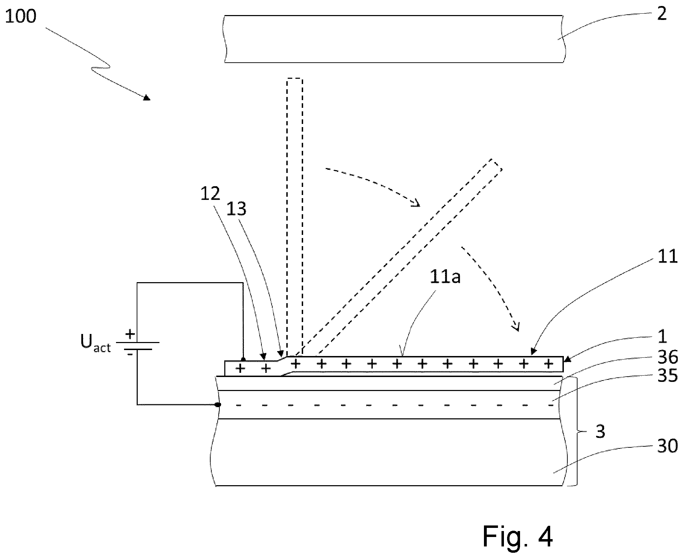

Eine weitere, hier nicht dargestellte Ausführungsform eines nicht von den Ansprüchen umfassten Displays kann abschnittweise wechselnd als ein reflektives oder transmissives Display ausgebildet sein, d.h., dass bestimmte Abschnitt der rückseitigen Grundplatte lichtundurchlässig und andere Abschnitte der rückseitigen Grundplatte lichtdurchlässig ausgebildet sind. Die Informationswiedergabe basiert dann abschnittsweise auf einer räumlich-zeitlichen Modulation der optischen Reflektivität oder der optischen Transmissivität des Displays, wobei den lichtdurchlässigen Abschnitten der rückseitigen Grundplatte separate Beleuchtungseinrichtungen zur Hinterleuchtung zugeordnet sein können. Zur Darstellung des elektrostatischen Aktuierungsprinzips zeigt Figur 4 eine schematische Querschnittsteilansicht eines erfindungsgemäßen Displays 100. Die Darstellung beinhaltet ein einzelnes Mikroblattelement 1, welches im Zwischenraum zwischen der frontseitigen Grundplatte 2 und der rückseitigen Grundplatte 3 aufgenommen und auf Letzterer angeordnet ist. Das Mikroblattelement 1 bildet eine Elektrode und weist zu diesem Zweck einen elektrisch leitfähigen Werkstoff auf. Die konkreten lichttechnischen Funktionen von Vorderseite 11a und Hinterseite 11b des Blattabschnitts 11 sind hier der Übersichtlichkeit halber nicht dargestellt. Die rückseitige Grundplatte 3 umfasst das Substrat 30, die lichtdurchlässige und elektrisch leitfähige Elektrodenschicht 35 sowie die lichtdurchlässige und elektrisch isolierende Isolationsschicht 36. Das Mikroblattelement 1 ist mit seinem Befestigungsabschnitt 12 auf der Isolationsschicht 36 angeordnet und über eine Krümmung seines Scharnierabschnitts 13 vollzieht sich die Schwenkbewegung des Blattabschnitts 11. In dem dargestellten Zustand ist zwischen dem Mikroblattelement 1 und der Elektroden 35 eine elektrische Aktuierungsspannung U_{act} angelegt, sodass eine elektrostatische Anziehung zwischen Elektrodenschicht 35 und Mikroblattelement 1 zu einem Schließen des Blattabschnitts 11 in die dargestellte horizontale, d.h., geschlossene Stellung führt. Strichliert dargestellt sind zwei geöffnete Stellungen des Blattabschnitts 11: eine im Wesentlichen orthogonal zu den Grundplatten 2, 3 orientierte Stellung, sowie eine halbgeöffnete Zwischenstellung, in welcher ein Winkel von etwa 45° zwischen dem Blattabschnitt 11 und den Grundplatten 2, 3 vorliegt. Die maximal geöffnete Stellung wird eingenommen, wenn das Mikroblattelement 1 und die Elektrodenschicht 35 auf demselben elektrischen Potential liegen, und in der teilgeöffneten Zwischenstellung liegt eine im Vergleich zur geschlossenen Stellung geringere Aktuierungsspannung U_{act} an. Durch geeignete Variation der angelegten Aktuierungsspannung U_{act} kann folglich eine Vielzahl an teilgeöffneten Zwischenstellung mit unterschiedlichen Winkeln des Blattabschnitts 11 gegenüber den Grundplatten 2, 3 eingestellt werden.

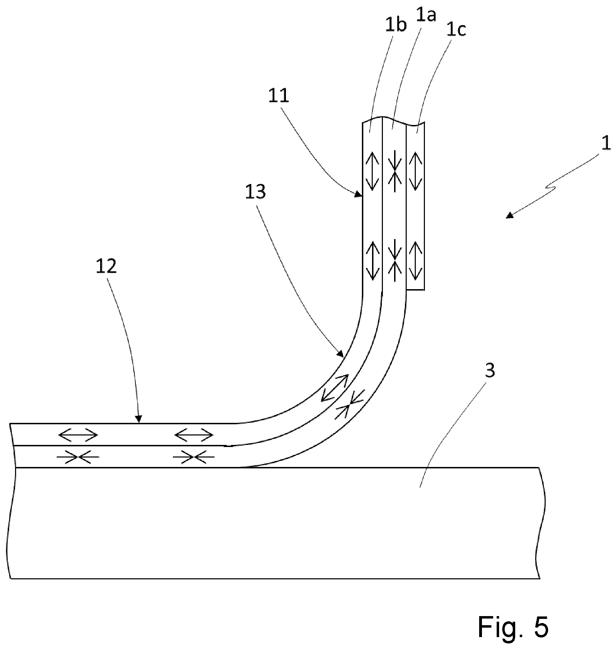

Figur 5 zeigt eine schematische Querschnittsteilansicht zur Demonstration der Eigenspannungen eines Mikroblattelements 1. Zum Zwecke der Übersichtlichkeit sind die lichttechnischen Funktionen des Mikroblattelements 1 abermals nicht dargestellt. Das Mikroblattelement 1 weist eine auf der Grundplatte 3 angeordnete druckverspannte Schicht 1a auf, sowie eine zugverspannte Schicht 1b. Die Wirkung dieser

Eigenspannungen besteht in der dargestellten Krümmung des Mikroblattelements 1 entlang des Scharnierabschnitts 13, hier beispielhaft um einen Aufrollwinkel von ca. 90°. Entlang des Befestigungsabschnitts 12 wird diese Krümmung durch die stoffschlüssige Verbindung zur Grundplatte 3 verhindert und entlang des Blattabschnitts 11 sorgt die zugverspannte Kompensationsschicht 1c dafür, dass die globale, d.h., effektiv wirksame Eigenspannung im Blattabschnitt 11 verschwindet und dort somit keine Krümmung auftritt. Die dargestellten Schichten 1a, 1b und 1c können beispielsweise in ihrer Gesamtheit eine Elektrode des Mikroblattelements 1 bilden und die lichttechnische Funktion des Mikroblattelements 1 wird durch darauf beidseitig applizierte, unverspannte Schichten oder Schichtsysteme erzeugt. In Figur 3 sind die unterschiedlich verspannten Schichten zum Zwecke der Übersichtlichkeit nicht eingehend dargestellt.

Insbesondere bei Verwendung von Methoden der Gasphasenabscheidung zur Deposition (PVD, CVD) sind üblicherweise sämtliche Schichten verspannt, d.h., beispielweise auch die schwarze Farbschicht auf dem Mikroblattelement. In diesem Fall wird zweckmäßigerweise die Gesamtschichtfolge zur Kompensation der mechanischen Spannungen im planaren Blattabschnitt 11 ausgelegt. Zur globalen Spannungskompensation im Blattabschnitt 11 sind prinzipiell bereits zwei unterschiedliche Schichten ausreichend, siehe das Ausführungsbeispiel der Figur 3. Hinsichtlich der Gestaltungsfreiheit betreffend die Funktionalität und die Dimensionen der Mikroblattelemente ist es jedoch vorteilhaft, mehr als zwei Schichten zu verwenden.

Figur 6 zeigt die Reflektivität von Grundplatten mit zwei unterschiedlichen Antireflexbeschichtungen, wobei der Darstellung rechnerische Simulationen unter Berücksichtigung der spektralen Variation der Brechungsindizes und der Absorption zugrunde liegen. Die Spektren beziehen sich jeweils auf einen auf einem Glassubstrat abgeschiedenen Schichtstapel aus einer FTO Elektrodenschicht, einer SiO₂ Isolationsschicht und einer Antireflexbeschichtung basierend auf einem Schichtstapel aus Al₂O₃-, Si₃N₄- und MgF₂-Dünnschichten (Option A) bzw. aus Al₂O₃-, Si₃N₄- und SiO₂-Dünnschichten (Option B). Im sichtbaren Bereich des Lichtspektrums, d.h., bei Lichtwellenlängen von 380 nm bis 740 nm, beträgt die Reflektivität im Wesentlichen weniger als 2%. In Kombination mit einer rückseitigen Schwärzung des Glassubstrats resultiert für den Betrachter ein schwarzer Farbeindruck über einen weiten Blickwinkelbereich.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht, solange diese Varianten unter den Schutzumfang der anhängigen Ansprüche fallen.

### Bezugszeichenliste:

- 1000: Anzeigegerät
- 100: Display
- 200: Beleuchtungseinrichtung
- 1: Mikroblattelement
- 1a: druckverspannte Schicht
- 1b: zugverspannte Schicht
- 1c: Kompensationsschicht
- 1d: Gradientenschicht
- 11: Blattabschnitt
- 11a: Vorderseite
- 11b: Hinterseite
- 12: Befestigungsabschnitt
- 13: Scharnierabschnitt
- 14: schwarze Farbschicht
- 2: frontseitige Grundplatte
- 20: Substrat
- 3: rückseitige Grundplatte
- 30: Substrat
- 21: Farbfilter
- 31: schwarze Farbbeschichtung
- 31a: Grenzflächenstruktur
- 32: Antireflexbeschichtung
- 33: weiße Farbbeschichtung
- 34: Farbfilter
- 35: Elektrodenschicht
- 36: Isolationsschicht

- U_{act}: Aktuierungsspannung

## Patentansprüche

1. Display (100) zur optischen Wiedergabe von veränderlichen Informationen, umfassend eine regelmäßige Anordnung von Mikroblattelementen (1) mit aktuierbaren Blattabschnitten (11), wobei die Mikroblattelemente (1) in regelmäßiger Matrixform in parallelen Zeilen und parallelen Spalten angeordnet sind und wobei die aktuierbaren Blattabschnitte (11) zwischen einer geschlossenen und wenigstens einer geöffneten Stellung schwenkbar ausgebildet sind, derart, dass die Informationswiedergabe auf einer räumlich-zeitlichen Modulation der optischen Reflektivität des Displays (100) mittels Aktuierung der Blattabschnitte (11) basiert, wobei die Vorderseite (11a) und die Hinterseite (11b) der Blattabschnitte (11) eine Spiegelwirkung für sichtbares Licht aufweisen, wobei das Display (100) eine lichtundurchlässige rückseitige Grundplatte (3) umfasst, wobei die rückseitige Grundplatte (3) einen schwarzen Farbeindruck erzeugt, insbesondere indem die rückseitige Grundplatte (3) eine schwarze Farbbeschichtung (31), ein schwarzes Substrat und/oder eine lichtabsorbierende Grenzflächenstruktur (31a) aufweist,
**dadurch gekennzeichnet,**
**dass** die Schwenkrichtungen aller Blattabschnitte (11) beim Schwenken um ihre Schwenkachse zwischen der geschlossenen und der wenigstens einen geöffneten Stellung gleich sind, und wobei die rückseitige Grundplatte (3) eine Antireflexbeschichtung (32) aufweist, insbesondere basierend auf einem Schichtstapel aus Al₂O₃-, Si₃N₄- und SiO₂-Dünnschichten oder einem Schichtstapel aus Al₂O₃-, Si₃N₄- und MgF₂-Dünnschichten.

2. Display (100) nach Anspruch 1,
**dadurch gekennzeichnet,**
**dass** das Display (100) einen Farbfilter (21, 34), insbesondere in Form eines Bayer-Filters, aufweist, vorzugsweise derart, dass jedem Farbpunkt des Farbfilters (21, 34) wenigstens ein Mikroblattelement (1) zugeordnet ist.

3. Display (100) nach einem der vorgenannten Ansprüche,
**dadurch gekennzeichnet,**
**dass** das Display (100) eine frontseitige Grundplatte (2) und die rückseitige Grundplatte (3) aufweist, wobei die frontseitige Grundplatte (2) lichtdurchlässig ausgebildet ist, und wobei die Mikroblattelemente (1) in einem Zwischenraum zwischen den Grundplatten (2, 3) aufgenommen sind, wobei jedes Mikroblattelement (1) einen Blattabschnitt (11) aufweist und mittels eines randseitigen Befestigungsabschnitts (12) scharnierartig auf einer der Grundplatten (2, 3) angeordnet ist, derart, dass jeder Blattabschnitt (11) ausgehend von einer geschlossenen, parallel zu den Grundplatten (2, 3) orientierten Stellung in wenigstens eine geöffnete, insbesondere rechtwinklig zu den Grundplatten (2, 3) orientierte Stellung schwenkbar ist.

4. Display (100) nach Anspruch 3,
**dadurch gekennzeichnet,**
**dass** die Mikroblattelemente (1) jeweils einen Schichtaufbau aufweisen, welcher wenigstens eine druckverspannte Schicht (1a) und eine zugverspannte Schicht (1b) umfasst, wobei der Blattabschnitt (11) jedes Mikroblattelements (1) zudem eine zweckmäßig verspannte Kompensationsschicht (1c) aufweist, derart, dass jedes Mikroblattelement (1) in die folgenden Abschnitte unterteilt ist:
- den Blattabschnitt (11), welcher global spannungsfrei ausgebildet ist und zwei im Wesentlichen planparallele Oberflächen aufweist,
- den randseitigen Befestigungsabschnitt (12), welcher starr auf einer der Grundplatten (2, 3) angeordnet ist, und
- einen dazwischenliegenden Scharnierabschnitt (13), welcher eine eigenspannungsinduzierte Krümmung aufweist, wodurch eine geöffnete Stellung des Mikroblattelements (1) gebildet ist.

5. Display (100) nach Anspruch 4,
**dadurch gekennzeichnet,**
**dass** das Schwenken der Blattabschnitte (11) zwischen der geschlossenen Stellung und der wenigstens einen geöffneten Stellung mittels eines elektrostatischen Wirkprinzips aktuierbar ist, wozu die zugehörige Grundplatte (2, 3) eine elektrisch leitfähige Elektrodenschicht (35) und wenigstens eine elektrisch isolierende Isolationsschicht (36) umfasst, wobei der Befestigungsabschnitt (12) jedes Mikroblattelements (1) auf der Isolationsschicht (36) angeordnet ist, und die Blattabschnitte (11) jeweils eine Elektrode aufweisen oder bilden, derart, dass durch Anlegen von elektrischen Spannungssignalen zwischen den Elektroden und der Elektrodenschicht (35) einzelne Mikroblattelemente (1) und/oder Gruppen von Mikroblattelementen (1) aktuierbar sind.

6. Display (100) nach einem der vorgenannten Ansprüche,
**dadurch gekennzeichnet,**
**dass** die Blattabschnitte (11) eine rechteckige Kontur, insbesondere eine quadratische Kontur, aufweisen, wobei die Kanten der Blattabschnitte (11) eine Länge im Bereich von 10 Mikrometer bis 1 Millimeter, vorzugsweise 100 Mikrometer bis 200 Mikrometer, aufweisen.

7. Display (100) nach einem der vorgenannten Ansprüche,
**dadurch gekennzeichnet, dass** die Gesamtheit der Mikroblattelemente (1) den zur Informationswiedergabe ausgebildeten Abschnitt des Displays (100) definiert.

8. Verwendung eines Displays (100) nach einem der vorgenannten Ansprüche für ein elektronisches Preisschild.

9. Anzeigegerät (1000) wenigstens umfassend:
- ein Display (100) zur optischen Wiedergabe von veränderlichen Informationen gemäß einem der Ansprüche 1 bis 7, und
- eine Beleuchtungseinrichtung (200) zur homogenen Ausleuchtung des Displays (100).

## Claims

1. A display (100) for the visual presentation of variable information, comprising a regular array of micro-leaf elements (1) with actuable leaf sections (11), wherein the micro-leaf elements (1) are arranged in a regular matrix formation in parallel rows and parallel columns, and wherein the actuable leaf sections (11) are designed to pivot between a closed position and at least one open position, such that the display of information is based on a spatio-temporal modulation of the optical reflectivity of the display (100) by means of actuation of the leaf sections (11), wherein the front side (11a) and the rear side (11b) of the leaf sections (11) exhibit a mirror-like effect for visible light, wherein the display (100) comprises an opaque rear base plate (3), wherein the rear base plate (3) produces a black colour impression, in particular by the rear base plate (3) comprising a black colour coating (31), a black substrate and/or a light-absorbing interface structure (31a), **characterised in that**
the pivot directions of all leaf sections (11) are the same when pivotling about their pivot axis between the closed position and the at least one open position, and wherein the rear base plate (3) comprises an anti-reflective coating (32), in particular based on a stack of Al₂O₃ -, Si₃ N₄ - and SiO₂ - thin films or a stack of Al₂ O₃ -, Si₃ N₄ - and MgF₂ - thin films.

2. Display (100) according to claim 1,
**characterised in that**
the display (100) comprises a colour filter (21, 34), in particular in the form of a Bayer filter, preferably such that at least one micro-leaf element (1) is assigned to each colour pixel of the colour filter (21, 34).

3. Display (100) according to one of the aforementioned claims, **characterised in that**
the display (100) comprises a front base plate (2) and a rear base plate (3), wherein the front base plate (2) is designed to be light-transmissive, and wherein the micro-leaf elements (1) are accommodated in a space between the base plates (2, 3), each micro-leaf element (1) comprising a leaf section (11) and being arranged in a hinge-like manner on one of the base plates (2, 3) by means of an edge-side mounting section (12), such that each leaf section (11) can be pivoted from a closed position, oriented parallel to the base plates (2, 3), into at least one open position, in particular one oriented at right angles to the base plates (2, 3).

4. Display (100) according to claim 3,
**characterised in that**
the micro-leaf elements (1) each have a layered structure comprising at least one compression-stressed layer (1a) and one tension-stressed layer (1b), wherein the leaf section (11) of each micro-leaf element (1) also comprises a suitably stressed compensation layer (1c), such that each micro-leaf element (1) is divided into the following sections:
- the leaf section (11), which is designed to be globally stress-free and has two substantially coplanar surfaces,
- the edge-side mounting section (12), which is rigidly mounted on one of the base plates (2, 3), and
- an intermediate hinge section (13), which exhibits a curvature induced by internal stress, thereby forming an open position of the micro-leaf element (1).

5. A display (100) according to one of the preceding claims,
**characterised in that**,
the pivoting of the leaf sections (11) between the closed position and the at least one open position can be actuated by means of an electrostatic principle, for which purpose the associated base plate (2, 3) comprises an electrically conductive electrode layer (35) and at least one electrically insulating layer (36), wherein the edge-side mounting section (12) of each micro-blade element (1) is arranged on the insulating layer (36), and the leaf sections (11) each comprise or form an electrode, such that individual micro-blade elements (1) and/or groups of micro-blade elements (1) can be actuated by applying electrical voltage signals between the electrodes and the electrode layer (35).

6. A display (100) according to one of the preceding claims,
**characterised in that**
the leaf sections (11) have a rectangular contour, in particular a square contour, wherein the edges of the leaf sections (11) have a length in the range from 10 micrometres to 1 millimetre, preferably 100 micrometres to 200 micrometres.

7. A display (100) according to one of the preceding claims,
**characterised in that**
the entirety of the micro-leaf elements (1) defines the section of the display (100) designed for information display.

8. Use of a display (100) according to any one of the preceding claims for an electronic price tag.

9. A display device (1000) comprising at least:
- a display (100) for the visual display of variable information in accordance with one of claims 1 to 7, and
- an illumination device (200) for uniformly illuminating the display (100).

## Revendications

1. Écran (100) destiné à l'affichage optique d'informations variables, comprenant un agencement régulier d'éléments à micro-lamelles (1) comportant des sections de lamelles actionnables (11), les micro-éléments à micro-lamelles (1) étant disposés selon une matrice régulière en lignes parallèles et en colonnes parallèles, et les sections de lamelles actionnables (11) étant conçues pour pivoter entre une position fermée et au moins une position ouverte, de telle sorte que l'affichage des informations repose sur une modulation spatio-temporelle de la réflectivité optique de l'écran (100) au moyen de l'actionnement des sections de lamelles (11), la face avant (11a) et la face arrière (11b) des sections de lamelles (11) présentent un effet miroir pour la lumière visible, l'écran (100) comprenant une plaque de base arrière opaque (3), la plaque de base arrière (3) produisant une impression de couleur noire, notamment en ce que la plaque de base arrière (3) comporte un revêtement de couleur noire (31), un substrat noir et/ou une structure d'interface absorbant la lumière (31a),
se **caractérise par le fait que**
les directions de pivotement de toutes les sections de lamelles (11) lors du pivotement autour de leur axe de pivotement sont identiques entre la position fermée et la au moins une position ouverte, et la plaque de base arrière (3) comportant un revêtement antireflet (32), notamment à base d'un empilement de couches minces d'Al₂O₃ , de Si₃ N₄ et de SiO₂ ou d'un empilement de couches minces d'Al₂ O₃, de Si₃ N₄ et de MgF₂.

2. Écran (100) selon la revendication 1,
**caractérisé en ce que**
l'écran (100) comporte un filtre coloré (21, 34), notamment sous la forme d'un filtre de Bayer, de préférence de telle sorte qu'au moins un élément en microfeuille (1) soit associé à chaque point de couleur du filtre coloré (21, 34).

3. Écran (100) selon l'une des revendications précédentes, **caractérisé en ce que**
l'écran (100) comporte une plaque de base avant (2) et une plaque de base arrière (3), la plaque de base avant (2) étant réalisée de manière à être translucide, et les éléments à micro-lamelles (1) étant logés dans un espace intermédiaire entre les plaques de base (2, 3), chaque élément à micro-lamelles (1) comportant une section de lamelle (11) et étant disposé à la manière d'une charnière sur l'une des plaques de base (2, 3) au moyen d'une partie de fixation périphérique (12), de telle sorte que chaque section de lamelle (11) puisse pivoter, à partir d'une position fermée, parallèle aux plaques de base (2, 3), vers au moins une position ouverte, orientée notamment perpendiculairement aux plaques de base (2, 3).

4. Écran (100) selon la revendication 3,
**caractérisé en ce que**
les micro-éléments de lame (1) présentent chacun une structure en couches comprenant au moins une couche contrainte en compression (1a) et une couche contrainte en traction (1b), la section de lamelle (11) de chaque micro-élément de lame (1) comportant en outre une couche de compensation (1c) contrainte de manière appropriée, de telle sorte que chaque élément à micro-lamelles (1) soit subdivisé en les sections suivantes :
- la partie de lamelles (11), qui est globalement exempte de contraintes et présente deux surfaces sensiblement planes et parallèles,
- la partie de fixation périphérique (12), qui est disposée de manière rigide sur l'une des plaques de base (2, 3), et
- une partie charnière intermédiaire (13), qui présente une courbure induite par des contraintes internes, ce qui permet de former une position ouverte de l'élément de micro-lame (1).

5. Écran (100) selon l'une des revendications précédentes, **caractérisé en ce que**,
le pivotement des sections de lamelles (11) entre la position fermée et la ou les positions ouvertes peut être actionné au moyen d'un principe de fonctionnement électrostatique, la plaque de base correspondante (2, 3) comprend une couche d'électrode électriquement conductrice (35) et au moins une couche isolante électriquement isolante (36), la partie de fixation (12) de chaque micro-élément de lame (1) étant disposée sur la couche isolante (36), et les parties de lamelles (11) comportent ou forment chacune une électrode, de telle sorte que l'application de signaux de tension électrique entre les électrodes et la couche d'électrode (35) permette d'actionner des micro-éléments en forme de lame (1) individuels et/ou des groupes de micro-éléments en forme de lame (1).

6. Écran (100) selon l'une des revendications précédentes,
**caractérisé en ce que**
les sections de lamelles (11) présentent un contour rectangulaire, en particulier un contour carré, les arêtes des sections de lamelles (11) ayant une longueur comprise entre 10 micromètres et 1 millimètre, de préférence entre 100 micromètres et 200 micromètres.

7. Écran (100) selon l'une des revendications précédentes,
**caractérisé en ce que**
l'ensemble des micro-éléments à micro-lamelles (1) définit la partie de l'écran (100) destinée à l'affichage d'informations.

8. Utilisation d'un écran (100) selon l'une des revendications précédentes pour une étiquette de prix électronique.

9. Dispositif d'affichage (1000) comprenant au moins:
- un écran (100) destiné à l'affichage optique d'informations variables selon l'une des revendications 1 à 7, et
- un dispositif d'éclairage (200) destiné à éclairer de manière homogène l'écran (100).
